# EUROPÄISCHE PATENTSCHRIFT

(11) **EP 2 181 792 B1**
(45) Veröffentlichungstag und Bekanntmachung des Hinweises auf die Patenterteilung: **20.04.2011**
(21) Anmeldenummer: 08019280.0
(22) Anmeldetag: 04.11.2008
(51) Int. Cl.: B23H 9/16, B23B 47/28

(54) **Vorrichtung und Verfahren zum Herstellen von Bohrungen in einer Kante einer Turbinenschaufel**
Device and method for producing drill holes in an edge of a turbine blade
Dispositif et procédé destinés à la fabrication de forages dans l'angle d'une aube de turbine

(43) Veröffentlichungstag der Anmeldung: 05.05.2010
(73) Patentinhaber: Siemens Aktiengesellschaft, 80333 München (DE)
(72) Erfinder: Berger, Ingo, 15739 Zeuthen (DE); Dunkel, Uwe, 13591 Berlin (DE); Raue, Steffi, 12435 Berlin (DE)

(56) Entgegenhaltungen:
- EP-A- 1 964 632
- DE-A1- 2 538 652
- GB-A- 2 143 849
- US-A- 5 775 856

## Beschreibung

Die Erfindung betrifft eine Vorrichtung zum Herstellen von Bohrungen in einer Kante einer Turbinenschaufel, mit einer Bohreinrichtung und einer Führung für die Bohreinrichtung, wobei die Führung ein Auflageelement und wenigstens zwei einander gegenüberliegende, jeweils mit einer Seitenfläche der Turbinenschaufel in Anlage bringbare Führungsmodule aufweist, die gemeinsam eine Spanneinrichtung zum Fixieren der Führung an der Turbinenschaufel bilden.

Turbinenschaufeln werden während des Betriebs hohen Belastungen ausgesetzt. Insbesondere müssen sie in chemisch aggressiver Atmosphäre hohen Temperaturen widerstehen. Es ist daher notwendig, sie zu kühlen, um ein vorzeitiges Versagen zu verhindern.

Besonders belastet sind die Eintritts- und Austrittskanten von Turbinenschaufeln. Um hier eine effektive Kühlung zu gewährleisten, werden in den Kanten eine Vielzahl von meist in Reihe angeordneten Kühlluftbohrungen ausgebildet, durch die dann während des Betriebs Kühlluft ausgeblasen wird.

Im Stand der Technik sind verschiedene Verfahren und Vorrichtungen zur Herstellung von Kühlluftbohrungen in Kanten von Turbinenschaufeln bekannt. Beispielsweise ist in der DE 25 38 653 ein elektrolytisches Feinbohrverfahren beschrieben. Bei diesem Verfahren wird eine Führung auf die Turbinenschaufel aufgesetzt, die für jede herzustellende Bohrung eine koaxiale Führungsbohrung aufweist. Durch die einzelnen Führungsbohrungen wird dann jeweils eine Röhrchenelektrode in Richtung der Kante der Turbinenschaufel vorgeschoben, um die Bohrungen auszubilden, wobei die Führung dafür sorgen soll, dass die Röhrchenelektroden am gewünschten Ort und im richtigen Winkel auf die Kante der Turbinenschaufel auftreffen.

Aus der EP 1964632 A1 ist eine Arretiervorrichtung für eine Turbinenschaufel bekannt, um diese während des Bohrens von Löchern zu fixieren. Die Arretiervorrichtung weist zwei mittels eines Gewindevortiebs gegeneinander bewegbare und durch einen Rahmen seitlich geführte Spannbacken auf, von denen eine mit Öffnungen zur Durchführung eines Bohrers versehen ist.

In der GB 2143849 A ist eine Auflageeinrichtung für eine Turbinenschaufel beschrieben, mit welcher Kühlkanäle an den Austrittskanten einer Turbinenschaufel mittles Elektrolytbohren erstellt werden können. Die Auflageeinrichtung weist einen Harzblock auf, dessen eine Flachseite an die Turbinenschaufeloberfläche angepasst ist. Auf der der Turbinenschaufel zugewandten Seite ist in den Harzblock ein Metallkörper eingelassen. Beim Bohrvorgang wird der Metallkörper zur Ausbildung einer Führung für den Elektrolytbohrer und Elektrolytstrahl von diesem durchbohrt, bevor der Bohrvorgang fortgesetzt und die eigentliche Bohrung der Turbinenschaufel vollzogen wird.

Aus dem Stand der Technik ist ebenfalls bekannt, Bohrungen in den Kanten einer Turbinenschaufel mit Hilfe von rotierenden Elektroden funkenerosiv herzustellen.

Mit den bekannten Verfahren bzw. den hierbei eingesetzten Vorrichtungen ist es bisher nicht möglich, die Bohrungen mit der nötigen Präzision insbesondere hinsichtlich ihrer Lagegenauigkeit herzustellen. Dies ist dadurch bedingt, dass die Ausrichtung der Bohreinrichtung während der Herstellung der Bohrungen nicht in ausreichendem Maße an die tatsächliche, Rohteilschwankungen unterliegende Geometrie der zu bearbeitenden Turbinenschaufeln angepasst werden kann. So ermöglichen es die im Stand der Technik bekannten Vorrichtungen vor allem nicht, die Führung in Position und Winkellage exakt in der gewünschten Weise zur Kante zu positionieren.

Der vorliegenden Erfindung liegt daher die Aufgabe zugrunde, eine Vorrichtung der eingangs genannten Art anzugeben, mit der es möglich ist, Bohrungen in der Kante einer Turbinenschaufel mit hoher Lage- und Winkelgenauigkeit herzustellen.

Diese Aufgabe ist bei der erfindungsgemäßen Vorrichtung dadurch gelöst, dass in dem Auflageelement ein von zwei Auflageprismen begrenzter Spalt ausgebildet ist, dessen Kontur der Form einer zu bearbeitenden Kante der Turbinenschaufel entspricht, wobei die Bohreinrichtung als Bohrwerkzeug wenigstens eine rotierende Elektrode aufweist und in dem Auflageelement, wenigstens eine Aussparung zum Durchführen der Elektrode ausgebildet ist.

Grundgedanke der Erfindung ist es somit, erstens ein Auflageelement mit einem darin ausgebildeten Spalt vorzusehen, in dem die zu bearbeitende Kante der Turbinenschaufel angeordnet werden kann. Zweitens werden wenigstens zwei einander gegenüberliegende Führungsmodule bereitgestellt, mit deren Hilfe die Führung an der Turbinenschaufel fixiert werden kann. Das Auflageelement und die Führungsmodule wirken dabei zusammen, um die Führung in der gewünschten Weise mit hoher Präzision relativ zu der bearbeitenden Kante der Turbinenschaufel zu positionieren. Dies ermöglicht es, mit Hilfe der Bohreinrichtung Bohrungen in der Kante herzustellen, deren Lage und Winkel exakt den Anforderungen entsprechen.

Die Bohreinrichtung kann als Bohrwerkzeug wenigstens eine rotierende Elektrode aufweisen. In diesem Fall kann in der Führung, insbesondere in dem Auflageelement, eine Aussparung zum Durchführen der Elektrode ausgebildet sein. Vorteilhafterweise kann dabei zumindest der Bereich der Führung, in dem die Aussparung ausgebildet ist, aus einem elektrisch isolierenden Material bestehen. Bevorzugt ist auch, wenn die Aussparung in Linie mit dem Spalt angeordnet ist.

In Weiterbildung der Erfindung ist vorgesehen, dass wenigstens eines der Führungsmodule ein zylinderförmiges Anlageelement aufweist. Dabei kann das Anlageelement insbesondere verschiebbar und fixierbar am Führungsmodul gehalten sein. Gemäß einer weiteren bevorzugten Ausführungsform kann das Auflageelement lösbar und austauschbar mit der Führung verbunden sein. Dies ermöglicht es die Vorrichtung an verschiedene zu bearbeitende Turbinenschaufeln anzupassen.

Ein weiterer Gegenstand der Erfindung ist ein Verfahren zum Herstellen von Bohrungen in einer Kante einer Turbinenschaufel, bei dem eine erfindungsgemäße Vorrichtung verwendet wird. Diese wird so auf die Turbinenschaufel aufgesetzt, dass die zu bearbeitende Kante der Turbinenschaufel zumindest bereichsweise in dem Spalt des Auflageelements angeordnet ist. Die Turbinenschaufel wird dann zwischen den Führungsmodulen eingespannt. Schließlich werden mit der Bohreinrichtung in der Kante der Turbinenschaufel Bohrungen hergestellt.

Die Erfindung wird im Folgenden anhand eines Ausführungsbeispiels unter Bezugnahme auf die Zeichnung im Detail erläutert. In der Zeichnung zeigen
- Figur 1: eine Seitenansicht einer erfindungemäßen Vorrich- tung,
- Figur 2: eine perspektivische Ansicht der Vorrichtung der Figur 1, und
- Figur 3: eine perspektivische Ansicht des Auflageelements der Vorrichtung der Figur 1.

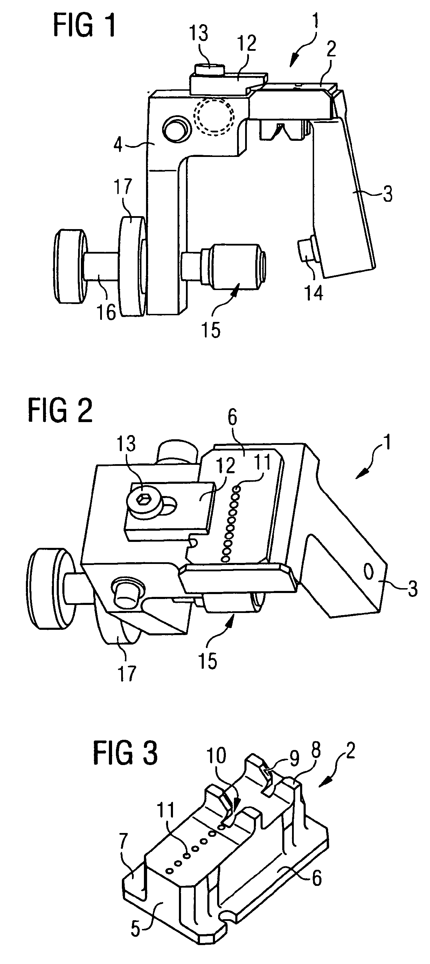

In den Figuren 1 bis 3 ist eine erfindungsgemäße Vorrichtung zum Herstellen von Bohrungen in einer Kante einer Turbinenschaufel dargestellt. Die Vorrichtung umfasst eine in der Zeichnung nicht dargestellte Bohreinrichtung, welche eine rotierende Elektrode als Bohrwerkzeug aufweist. Die Elektrode ist hier für die funkenerosive Bearbeitung ausgelegt. Weiterhin gehört zu der Vorrichtung eine Führung 1.

Die Führung 1 weist ein Auflageelement 2 und zwei Führungsmodule 3 und 4 auf. Das Auflageelement 2 besteht aus einem Grundkörper 5, daran seitlich angebrachter Flansche 6 und 7 sowie vier Abstützelementen 8, die jeweils paarweise gegenüberliegend angeordnet sind und Auflageflächen 9 aufweisen. Die Auflageflächen 9 begrenzen einen zwischen den Abstützelementen 8 liegenden Spalt 10. Der Spalt 10 hat etwa die Form einer Kante einer Turbinenschaufel.

In dem Auflageelement 2 ist eine Vielzahl von kreisförmigen Aussparungen 11 in einer Reihe und in Linie mit dem Spalt 10 ausgebildet. Die Aussparungen 11 weisen dabei jeweils eine Größe und eine Form auf, die mit der der Elektrode der Bohreinrichtung korrespondiert. Das Auflageelement 2 besteht aus einem elektrisch isolierenden Material. Dabei kann es sich beispielsweise um einen Kunststoff oder um eine Keramik handeln.

Im montierten Zustand ist das Auflageelement 2 mit seinem Grundkörper 5 durch eine Öffnung in der Führung 1 hindurch geschoben, so dass die Flansche 6 und 7 am Rand der Öffnung auf der Führung 1 aufliegen. Das Auflageelement 2 ist mit Hilfe eines dieses übergreifenden Haltelements 12, dass selbst über eine Schraube 13 an der Führung 1 angebracht ist, lösbar mit der Führung 1 verbunden.

Das in der Zeichnung auf der rechten Seite dargestellte Führungsmodul 3 weist ein starres, zylinderförmiges Anlageelement 14 auf. Im Gegensatz hierzu ist das in der Zeichnung links dargestellte Führungsmodul 4 mit einem verschiebbaren Anlageelement 15 versehen. Das Anlageelement 15 ist mit einem zylinderförmig ausgebildeten Abschnitt 16 in einer korrespondierenden Ausnehmung des Führungsmoduls 4 verschiebbar gehalten. Es weist ein Arretierungsmittel 17 auf, das ausgebildet ist, um nach Betätigung die freie Verschiebbarkeit des Anlageelements 15 relativ zu dem Führungsmodul 4 aufzuheben.

Um mit der Vorrichtung beispielsweise in der Hinterkante einer Turbinenschaufel Kühlluftbohrungen herzustellen, wird wie folgt vorgegangen.

Zunächst wird die Führung 1 so auf die Turbinenschaufel aufgesetzt, dass die Hinterkante mit dem zu bearbeitenden Bereich in dem Spalt 10 des Auflageelements 2 angeordnet ist. Dabei kommen die Abstützelemente 8 mit ihren Auflageflächen 9 mit der Turbinenschaufel in Anlage.

Anschließend wird die Turbinenschaufel zwischen den Führungsmodulen 3 und 4 eingespannt. Dazu wird das Anlageelement 15 so weit verschoben, bis es zusammen mit dem starren Anlageelement 14 mit der Turbinenschaufel in klemmenden Kontakt kommt. Dann wird das Arretierungsmittel 17 betätigt, um das Anlageelement 15 in dieser Position zu fixieren. Im Ergebnis wird auf diese Weise die Führung 1 exakt im gewünschten Winkel und in der gewünschten Lage relativ zu der zu bearbeitenden Kante der Turbinenschaufel positioniert, wobei hierbei das Auflageelement 2 und die Führungsmodule 3 und 4 zusammenwirken.

Zuletzt werden mit Hilfe der Bohreinrichtung die Bohrungen in der Hinterkante der Turbinenschaufel hergestellt. Dazu wird an die rotierende Elektrode und an die Turbinenschaufel eine für eine funkenerosive Bearbeitung geeignete elektrische Spannung angelegt und die Elektrode durch eine der Aussparungen 11 hindurchgeführt. Während der Bearbeitung sorgt die Lage und die Orientierung der Aussparungen 11 in dem Auflageelement 2 der Führung 1 dafür, dass die Bohrung an der vorgesehenen Stelle im vorgesehenen Winkel in der Hinterkante der Turbinenschaufel ausgebildet wird, wenn es zur Funkenentladung zwischen der Elektrode und der Turbinenschaufel kommt. Auf diese Weise werden nacheinander jeweils durch eine Aussparungen 11 hindurch Bohrungen in der Hinterkante der Turbinenschaufel hergestellt.

Es ist alternativ auch möglich, eine Bohreinrichtung zu verwenden, die mehrere, ebenfalls in einer Linie angeordnete Bohrwerkzeuge aufweist. In diesem Fall können die Bohrungen gleichzeitig in einem Durchgang hergestellt werden.

Wenn beispielsweise in einer weiteren Turbinenschaufel mit abweichender Geometrie Bohrungen hergestellt werden sollen, kann auf einfache Weise bei der erfindungemäßen Vorrichtung das Auflageelement 2 ausgetauscht werden. Dazu muss lediglich die Schraube 13 gelöst, dass Halteelement 12 abgenommen und das vorhandene durch ein neues Auflageelement 2 ersetzt werden. Zuletzt muss dann nur noch dass Haltelement 12 wieder mit der Schraube 13 an der Führung 1 befestigt werden.

Das erfindungsgemäße Verfahren ermöglicht es, mit hoher Präzision in der Hinterkante der Turbinenschaufel Kühlluftbohrungen herzustellen.

## Patentansprüche

1. Vorrichtung zum Herstellen von Bohrungen in einer Kante einer Turbinenschaufel,
mit einer Bohreinrichtung und einer Führung (1) für die Bohreinrichtung, wobei die Führung (1) ein Auflageelement (2) und wenigstens zwei einander gegenüberliegende, jeweils mit einer Seitenfläche der Turbinenschaufel in Anlage bringbare Führungsmodule (3, 4) aufweist, die gemeinsam eine Spanneinrichtung zum Fixieren der Führung (1) an der Turbinenschaufel bilden,
**dadurch gekennzeichnet, dass**
in dem Auflageelement (2) ein von zwei Auflageprismen begrenzter Spalt (10) ausgebildet ist, dessen Kontur der Form einer zu bearbeitenden Kante der Turbinenschaufel entspricht, wobei die Bohreinrichtung als Bohrwerkzeug wenigstens eine rotierende Elektrode aufweist und in dem Auflageelement (2), wenigstens eine Aussparung (11) zum Durchführen der Elektrode ausgebildet ist.

2. Vorrichtung nach Anspruch 1,
**dadurch gekennzeichnet, dass**
zumindest der Bereich der Führung (1), in dem die Aussparungen (11) ausgebildet, aus einem elektrisch isolierenden Material besteht.

3. Vorrichtung nach Anspruch 1 oder 2,
**dadurch gekennzeichnet, dass**
die Aussparung (11) in Linie mit dem Spalt (10) angeordnet ist.

4. Vorrichtung nach einem der vorhergehenden Ansprüche,
**dadurch gekennzeichnet, dass**
wenigstens eines der Führungsmodule (3, 4) ein zylinderförmiges Anlageelement (14, 15) aufweist.

5. Vorrichtung nach Anspruch 4,
**dadurch gekennzeichnet, dass**
das Anlageelement verschiebbar und fixierbar am Führungsmodul gehalten ist.

6. Vorrichtung nach einem der vorhergehenden Ansprüche,
**dadurch gekennzeichnet, dass**
das Auflageelement (2) lösbar und austauschbar mit der Führung (1) verbunden ist.

7. Verfahren zum Herstellen von Bohrungen in einer Kante einer Turbinenschaufel, bei dem eine Vorrichtung nach einem der vorhergehenden Ansprüche so auf die Turbinenschaufel aufgesetzt wird, dass die zu bearbeitende Kante der Turbinenschaufel zumindest bereichsweise in dem Spalt (10) des Auflageelements (2) angeordnet ist, die Turbinenschaufel zwischen den Führungsmodulen (3, 4) eingespannt wird und mit der Bohreinrichtung in der Kante der Turbinenschaufel Bohrungen hergestellt werden.

## Claims

1. Apparatus for making bores in an edge of a turbine blade, with a drilling device and with a guide (1) for the drilling device, the guide (1) having a bearing element (2) and at least two guide modules (3, 4) which lie opposite one another and can in each case be brought to bear with a side face of the turbine blade and which together form a tension device for fixing the guide (1) on the turbine blade, **characterized in that** a gap (10) delimited by two bearing prisms in the bearing element (2) is formed and the contour of which corresponds to the shape of a turbine blade edge to be machined, the drilling device having at least one rotating electrode as the drilling tool and at least one clearance (11) for leading through the electrode being formed in the guide (1), in the bearing element (2).

2. Apparatus according to Claim 1, **characterized in that** at least that region of the guide (1) in which the clearances (11) are formed consists of an electrically insulating material.

3. Apparatus according to Claim 1 or 4, **characterized in that** the clearance (11) is arranged in line with the gap (10).

4. Apparatus according to one of the preceding claims, **characterized in that** at least one of the guide modules (3, 4) has a cylindrical locating element (14, 15).

5. Apparatus according to Claim 4, **characterized in that** the locating element is held on the guide module displaceably and fixably.

6. Apparatus according to one of the preceding claims, **characterized in that** the bearing element (2) is connected to the guide (1) releasably and exchangeably.

7. Method for making bores in a turbine blade edge, in which an apparatus according to one of the preceding claims is placed onto the turbine blade such that the turbine blade edge to be machined is arranged at least in regions in the gap (10) of the bearing element (2), the turbine blade is tension-mounted between the guide modules (3, 4), and bores are made in the turbine blade edge by means of the drilling device.

## Revendications

1. Dispositif de production de perçages dans un bord d'une aube de turbine, comprenant un dispositif de perçage et un guidage ( 1 ) du dispositif de perçage, le guidage ( 1 ) ayant un élément ( 2 ) d'appui et au moins deux modules ( 3, 4 ) de guidage qui sont opposés l'un à l'autre, qui peuvent être mis respectivement en contact avec une surface latérale de l'aube de turbine et qui forment conjointement un dispositif de blocage, pour immobiliser le guidage ( 1 ) sur l'aube de turbine,
**caractérisé en ce que**
dans l'élément ( 2 ) d'appui est formé une fente ( 10 ) qui est délimitée par deux prismes d'appui et dont le contour correspond à la forme d'un bord à usiner de l'aube de turbine, le dispositif de perçage ayant comme outil de perçage au moins une électrode tournante et au moins un évidement ( 11 ) de passage de l'électrode est formé dans l'élément ( 2 ) d'appui.

2. Dispositif suivant la revendication 1,
**caractérisé en ce que**
au moins la partie du guidage ( 1 ) dans laquelle les évidements ( 11 ) sont formés est en un matériau isolant du point de vue électrique.

3. Dispositif suivant la revendication 1 ou 2,
**caractérisé en ce que**
l'évidemment ( 11 ) est aligné avec la fente ( 10 ).

4. Dispositif suivant l'une des revendications précédentes,
**caractérisé en ce qu'**au moins l'un des modules ( 3, 4 ) de guidage a un élément ( 14, 15 ) de contact en forme de cylindre.

5. Dispositif suivant la revendication 4,
**caractérisé en ce que**
l'élément ( 4 ) de contact est maintenu avec possibilité de coulissement et d'immobilisation sur le module de guidage.

6. Dispositif suivant l'une des revendications précédentes,
**caractérisé en ce que**
l'élément ( 2 ) de contact est assemblé au guidage ( 1 ) de manière amovible et remplaçable.

7. Procédé de production de perçage dans un bord d'une aube de turbine, dans lequel on met un dispositif suivant l'une des revendications précédentes sur l'aube de turbine, de manière à ce que le bord à usiner de l'aube de turbine soit disposé, au moins par partie, dans la fente ( 10 ) de l'élément ( 2 ) d'appui, on bloque l'aube de turbine entre les modules ( 3, 4 ) de guidage et on produit des perçages dans le bord de l'aube de turbine par le dispositif de perçage.
